# EUROPEAN PATENT SPECIFICATION

(11) **EP 2 545 699 B1**
(45) Date of publication and mention of the grant of the patent: **05.11.2014**
(21) Application number: 11709571.1
(22) Date of filing: 09.03.2011
(51) Int. Cl.: H04M 7/00

(54) **SYSTEM AND METHOD FOR MOBILE-TO-COMPUTER COMMUNICATION**
SYSTEM UND VERFAHREN FÜR KOMMUNIKATION VON EINEM MOBILTELEFON ZU EINEM COMPUTER
SYSTÈME ET PROCÉDÉ POUR UNE COMMUNICATION MOBILE À ORDINATEUR

(30) Priority: 08.03.2011 US 201113042912; 09.03.2010 US 312230 P
(43) Date of publication of application: 16.01.2013
(73) Proprietor: QUALCOMM Incorporated, San Diego, CA 92121 (US)
(72) Inventor: HARRIS, Sarah, Har Nof Jerusalem (IL); JACOBSTEIN, Mark Williams, San Francisco California 94114 (US); GUEDALIA, Jacob, Newton Massachusetts 02458 (US); GUEDALIA, Isaac David, Bet Shemesh (IL)
(74) Representative: Reedy, Orlaith
(86) International application number: PCT/US2011/027734
(87) International publication number: WO 2011/112708

(56) References cited:
- GB-A- 2 450 385
- US-A1- 2002 075 304
- US-A1- 2008 175 225

## Description

The present Application for Patent is based on International Application No. PCT/US2011/027734, which corresponds to International Publication No. WO 2011/112708 claiming priority to at least U.S. Patent Application Serial No. 13/042,912, entitled "SYSTEM AND METHOD FOR MOBILE-TO-COMPUTER COMMUNICATION," filed March 8, 2011 and published as U.S. Patent Application Publication No. 2011/0249621.

### Background

The present application relates to wireless communications for wireless devices, and more specifically to establishing voice communication between a mobile communication device and a computer.

Wireless communication systems have developed through various generations, including a first-generation analog wireless phone service (1G), a second- generation (2G) digital wireless phone service (including interim 2.5G and 2.75G networks) and a third-generation (3G) and fourth generation (4G) high speed data / Internet-capable wireless service. There are presently many different types of wireless communication systems in use, including Cellular and Personal Communications Service (PCS) systems. Examples of known cellular systems include the cellular Analog Advanced Mobile Phone System (AMPS), and digital cellular systems based on Code Division Multiple Access (CDMA), Frequency Division Multiple Access (FDMA), Time Division Multiple Access (TDMA), the Global System for Mobile access (GSM) variation of TDMA, and newer hybrid digital communication systems using both TDMA and CDMA technologies.

Various call modalities are known. Some wireless devices can communicate to each other and/or to land line phones using circuit switched connections. Others connect computers to one another and can connect a computer and a wireless device using packet switched techniques, such as Voice over Internet Protocol (VoIP).

GB2450385 discloses a system for providing telephony services for members of a community via a mobile communication network.

US Patent Publication No. US 2008/175225 discloses a method for establishing a hybrid voice session between a mobile device and a VoIP device.

However, it remains difficult to conveniently arrange, set up and conduct voice communication between a wireless device and a computer such as a personal computer (PC).

### SUMMARY

Exemplary aspects of the disclosure are directed to systems and method for facilitating voice communications between a wireless device and a personal computer by leverage existing voice communication technology (e.g., circuit switched technology) and commonly shared communication servers that are not dedicated to establishing voice communications (e.g., Instant Message (IM) servers, social network servers, etc.).

An aspect can include a method of establishing a voice call between a wireless device and a personal computer (PC), the method comprising: receiving a call initiation message including information for the PC at a server from the wireless device; setting up a conference, including establishing a conference ID to conference the wireless device and the PC; generating a message for the PC containing voice contact information for the wireless device related to the conference ID; transmitting the message to the PC; and transmitting a dial-in phone number to the wireless device to dial into the conference.

Another aspect can include an apparatus configured to establish a voice call between a wireless device and a personal computer (PC), the apparatus comprising: a first module to receive a call initiation message including information for the PC from the wireless device; a second module configured to set up a conference, including being configured to establish a conference ID to conference the wireless device and the PC; a third module configured to generate a message for the PC containing voice contact information for the wireless device related to the conference ID; a fourth module configured to transmit the message to the PC; and a fifth module configured to transmit a dial-in phone number to the wireless device to dial into the conference.

Another aspect can include an apparatus for establishing a voice call between a wireless device and a personal computer (PC), the apparatus comprising: means for receiving a call initiation message including information for the PC at a server from the wireless device; means for setting up a conference, including establishing a conference ID to conference the wireless device and the PC; means for generating a message for the PC containing voice contact information for the wireless device related to the conference ID; means for transmitting the message to the PC; and means for transmitting a dial-in phone number to the wireless device to dial into the conference.

Another aspect can include a non-transitory computer-readable storage medium comprising at least one sequence of instructions related to establishing a voice call between a wireless device and a personal computer (PC), the instructions comprising: at least one instruction for receiving- a call initiation message including information for the PC at a server from the wireless device; at least one instruction for setting up a conference, including establishing a conference ID to conference the wireless device and the PC; at least one instruction for generating a message for the PC containing voice contact information for the wireless device related to the conference ID; at least one instruction for transmitting the message to the PC; and at least one instruction for transmitting a dial-in phone number to the wireless device to dial into the conference.

Other aspects can include methods and apparatuses for establishing a voice call between a wireless device and a personal computer (PC) at the PC, the method comprising: logging into a first server that is also accessible by the wireless device; receiving a message at the PC containing voice contact information for the wireless device and code to launch a phone application; launching the phone application; and making the voice call from the PC via a second server using the voice contact information, wherein the voice contact information is not a phone number of the wireless device.

Still other aspects can include methods and apparatuses for establishing a voice call between a wireless device and a PC, at the wireless device the method comprising: logging into a first server, by the wireless device that contains contact information for the PC; identifying presence of the PC based on a presence indication from the first server; contacting a second server with contact information for the PC to establish the voice call; receiving a dial-in phone number from the second server; and calling a Private Branch Exchange (PBX) server using the dial-in phone number.

### BRIEF DESCRIPTION OF THE DRAWINGS

The accompanying drawings are presented to aid in the description of aspects of the disclosure and are provided solely for illustration of the aspects and not limitation thereof.
FIG. 1 is an illustration of a wireless system.
FIG. 2 is an illustration of one example of a wireless device.
FIG. 3 is an illustration of one example of a personal computer.
FIG. 4 is an illustration of one example of a personal computer.
FIG. 5 is an illustration of a wireless system including various servers, a personal computer and wireless device.
FIG. 6 is an illustration of one example of call flows.
FIG. 7 is an illustration of another example a wireless system including various servers, a personal computer and wireless device.
FIG. 8 is an illustration of one example flowchart for activities performed at least in part on a wireless device.
FIG. 9 is an illustration of one example flowchart for activities performed at least in part on one or more servers.
FIG. 10 is an illustration of another example flowchart for activities performed at least in part on a personal computer.

### DETAILED DESCRIPTION

Aspects of the disclosure are disclosed in the following description and related drawings directed to specific aspects of the disclosure. Alternate aspects may be devised without departing from the scope of the invention. Additionally, well-known elements of the invention will not be described in detail or will be omitted so as not to obscure the relevant details of the invention.

The word "exemplary" is used herein to mean "serving as an example, instance, or illustration." Any aspect described herein as "exemplary" is not necessarily to be construed as preferred or advantageous over other aspects. Likewise, the terms "embodiments of the invention" or "aspects of the disclosure" do not require that all embodiments or aspects include the discussed feature, advantage or mode of operation. The terminology used herein is for the purpose of describing particular aspects only and is not intended to be limiting of aspects of the disclosure. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, functionalities, steps, operations, elements, and/or components, but do not preclude the presence or addition of one or more other features, functionalities, steps, operations, elements, components, and/or groups thereof.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

A radio access network, may be connected to additional networks outside the radio access network, such core network including specific carrier related servers and devices and connectivity to other networks such as a corporate intranet, the Internet, public switched telephone network (PSTN), a Serving General Packet Radio Services (GPRS) Support Node (SGSN), a Gateway GPRS Support Node (GGSN), and may transport voice and data packets between each wireless device and such networks. A wireless device may be any data device that communicates through a wireless channel. A wireless device may further be any of a number of types of devices including but not limited to a PC card, compact flash device, external or internal modem, or cellular phone, for example.

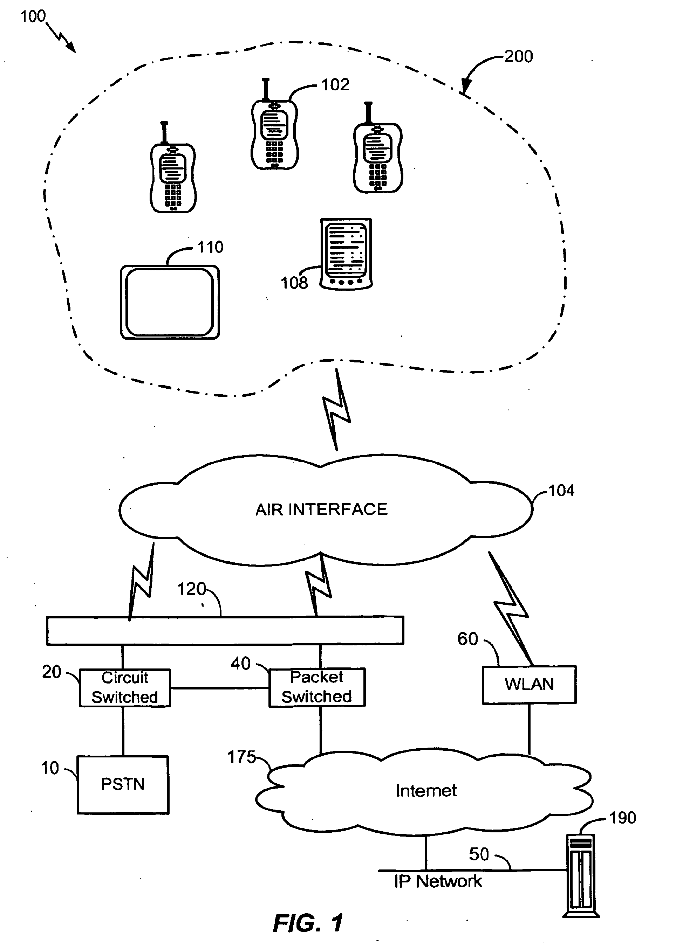

FIG. 1 illustrates a block diagram of one exemplary aspect of a wireless communications system 100 in accordance with at least one aspect of the disclosure. System 100 can contain wireless devices 200 such as cellular telephone 102, in communication across an air interface 104 with an access network or radio access network (RAN) 120 that can connect the wireless device 200 to network equipment providing data connectivity between a packet switched data network (e.g., an intranet, the Internet 175, and/or IP core network 50) and the wireless devices 200 (e.g., 102, 108, and 110). As shown here, the wireless device 200 can be a cellular telephone 102, a tablet device 110, or a smart phone 108. Aspects of the disclosure can thus be realized on any form of wireless device including a wireless having wireless communication capabilities. Further, as used herein, the term "wireless device" may be referred to interchangeably as an "access terminal", "AT", "UE", "client device", "mobile terminal", "mobile station" and variations thereof.

Referring back to FIG. 1, the components of the wireless communications system 100 and interrelation of the elements of the exemplary aspects of the disclosure are not limited to the configuration illustrated. Wireless communications system 100 is merely provided for illustration and can include any system that allows wireless devices 200, such as 102, 108, and/or 110, to communicate over-the-air between and among each other and/or between and among components connected via the air interface 104 and RAN 120 to a circuit switched network 20 and/or a packet switched network 40. Wireless devices, such as 102, 108, and 110, may use the circuit switched network 20 to communicate to the public switched telephone network (PSTN) 10, which supports legacy landline devices. Wireless devices, such as 102, 108, and 110, may also communicate to the Internet 175 and/or IP networks and/or other remote servers 190 over the packet switched network 40. Wireless devices, such as 102, 108, and 110, may also communicate to the Internet 175 and/or IP networks and/or other remote servers 190 over a wireless LAN (WLAN) 60, which can also be accessed by air interface 104.

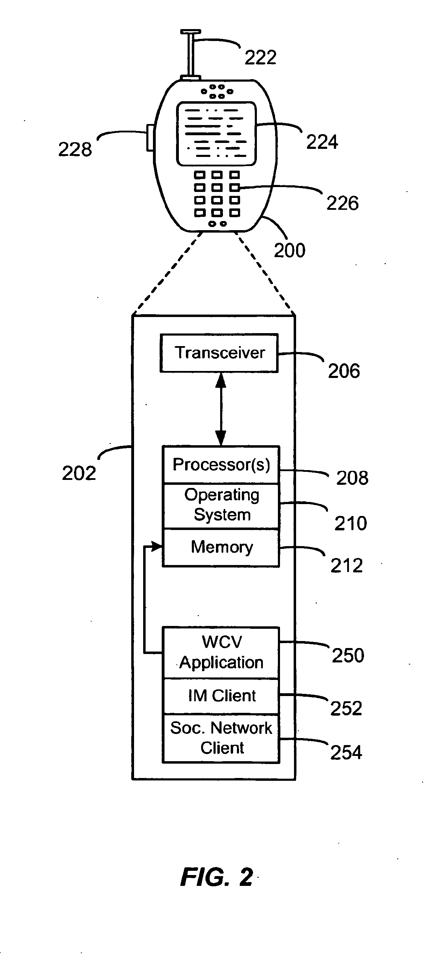

Referring to FIG. 2, a wireless device 200 is illustrated, such as a cellular telephone. The wireless device has a platform 202 that can receive and execute software applications, data and/or commands transmitted from the RAN 120 that may ultimately come from the Internet 175 and/or other remote servers and networks. The platform 202 can include RF transceiver circuitry 206 (which may include multiple RF circuits for operating on various networks, such as cellular, WiFi, etc.) operably coupled to one or more processors 208, or other data processing device. The processor 208 executes an operating system 210 layer that interfaces with any resident programs in the memory 212 of the wireless device. The memory 212 can be comprised of read-only or random-access memory (RAM and ROM), EEPROM, flash cards, or any memory common to computer platforms. The platform 202 components and software can also be operably coupled to external devices such as antenna 222, display 224, push-to-talk button 228 and keypad 226 among other components, as is known in the art.

Accordingly, an aspect of the disclosure can include a wireless device including a wireless client voice (WCV) application 250 that is loaded into memory 212 and executed on processor 208 that has the ability to interface to the various capabilities of wireless device 200 to perform the functions described hereafter in relation to the various aspects of the disclosure. Other applications, such as IM client 252 and social networking client 254 may also be active on a personal computer PC and used in aspects as discussed hereafter. As will be appreciated by those skilled in the art, the various aspects of the disclosure can be embodied in discrete elements, software modules executed on a processor or any combination of software and hardware to achieve the functionality disclosed herein. For example, processor 208, memory 212, and operating system 210 may all be used to cooperatively load, store and execute the WCV application 250 and other applications to perform various functions disclosed herein and thus the logic or modules to perform these functions may be distributed over various elements. Further, it will be appreciated that the features of the wireless device 200 in FIG. 2 are to be considered merely illustrative and the various aspects of the disclosure are not limited to the illustrated features or arrangement.

The wireless communication between the wireless device 200 and the RAN 120 can be based on different technologies, such as code division multiple access (CDMA), W-CDMA, time division multiple access (TDMA), frequency division multiple access (FDMA), Orthogonal Frequency Division Multiplexing (OFDM), the Global System for Mobile Communications (GSM), or other protocols that may be used in a wireless communications network or a data communications network. As discussed in the foregoing and known in the art, voice transmission and/or data can be transmitted to the wireless devices 200 from the RAN using a variety of networks and configurations. Accordingly, the illustrations provided herein are not intended to limit the aspects of the disclosure and are merely to aid in the description of aspects of aspects of the disclosure.

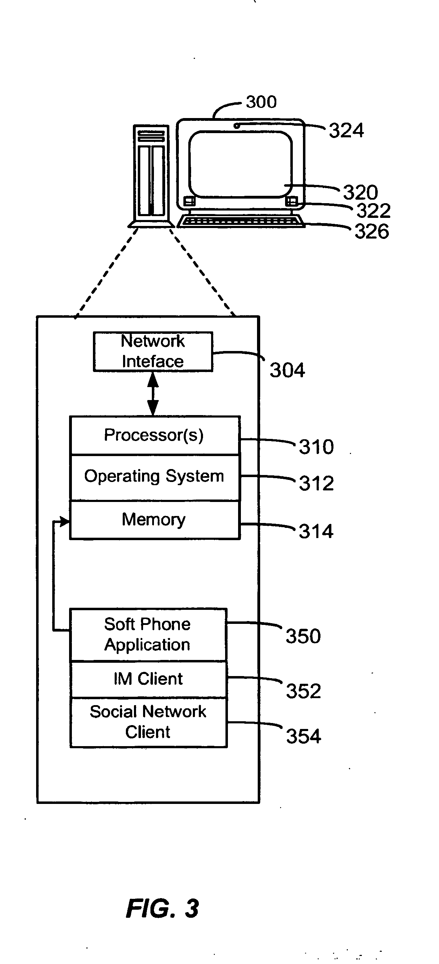

FIG. 3 is an illustration of a personal computer, PC 300, which can be used to communicate to wireless device 200 as discussed herein. PC 300 can have a network interface 304 for connecting to the Internet 175 via a local network (e.g., a LAN, WLAN or the like). The communications over network interface 304 are typically packet switched. PC 300 can also include one or more processors 310, operating system 312 and memory 314 (including RAM and hard disk, etc.). The processor 310, operating system 312 and the memory 314 of the PC 300 are used to execute various applications on PC 300. These applications also have access to various hardware and software components of PC 300 such as a display 320, audio output 322, microphone input 324, keyboard 326, pointing device (which may be an independent device or integrated into keyboard 326), and others as know in the art.

Accordingly, an aspect of the disclosure can include a PC 300 including a soft phone application 350 that may be implemented as a Flash® client application that is loaded into memory 314 and executed at least in part by processor 310 that has the ability to perform the functions described hereafter in relation to the various aspects of the disclosure. For example, in one aspect, the soft phone application 350 may be stored on a remote server and when a URL linking to the stored soft phone application is opened, the soft phone application 350 can be downloaded from the remote server and executed at least in part on PC 300. In another aspect, the soft phone application 350 may be stored and instantiated locally in PC 300. For example, soft phone application 350 may, at least in part, be instantiated before the call information is provided, so that it can detect specific messages having information to be used by the soft phone and communicate with the wireless device, which can allow for the automatic launch of the soft phone.

Other applications, such as IM client 352 and social networking client 354 may also be active on PC 300 and used in aspects as discussed hereafter. As will be appreciated by those skilled in the art, the various logic performing these functions may be distributed over various elements in a networked environment. Further, it will be appreciated that the features of the PC 300 in FIG. 3 are to be considered merely illustrative and the various aspects of the disclosure are not limited to the illustrated features or arrangement.

Aspects disclosed herein are directed to systems and methods for providing communication including voice communication between a wireless device and a computer coupled to a wired network. By wired networks, it is meant those networks connecting an apparatus (e.g., PC 300) to the network / Internet at least in part through hard wires, optical lines, cables, and the like. By wireless or mobile or cellular networks, it is meant those networks substantially including some radio frequency or microwave or other non-wired communication link(s) to carry the voice and/or data of concern, such as described in relation to FIG. 1 provided above.

In contrast to known communication techniques, such as group or dispatch communications that are based on packet switched technology arbitrated by an application server, aspects disclosed herein are directed to systems and methods for providing voice communication between a wireless device and a computer (e.g., PC 300) coupled to a wired network. Aspects leverage existing voice communication protocols (e.g., circuit switched technology) and commonly shared communication servers that are not dedicated to establishing voice communications (e.g., IM servers, social network servers, etc.).

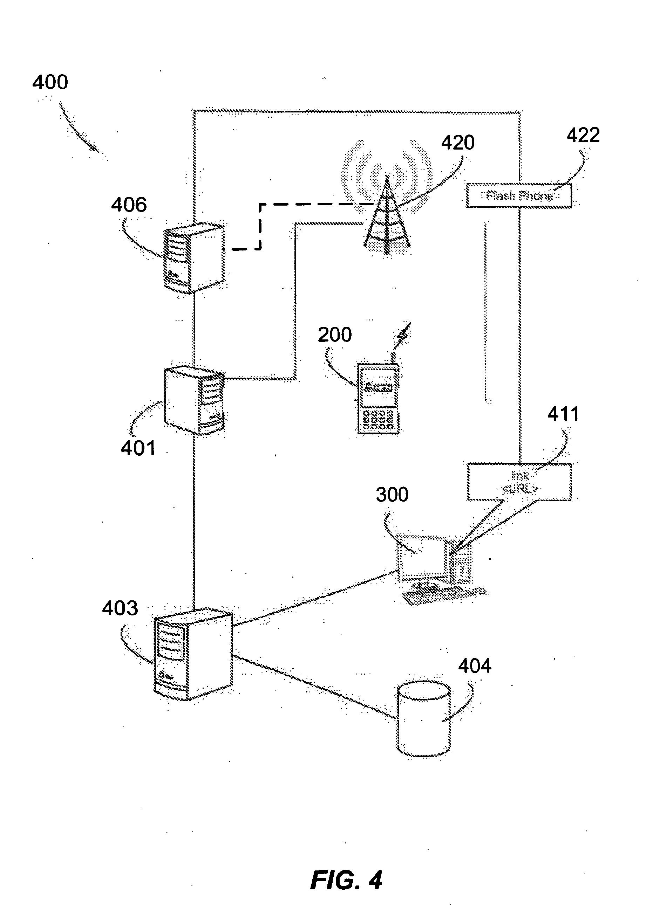

The following discussion refers to FIG. 4, which illustrates a system 400 for communication between a wireless device and a personal computer device, PC 300.

The system 400 can include or be coupled to a number of server devices (e.g., 401, 403, 406), wireless communication infrastructure, e.g., cellular communication infrastructure or wireless network 420 (which may include elements such as RAN 120 and related infrastructure as illustrated in FIG. 1), and communication devices, such as a wireless device 200 and a PC 300 and associated wired infrastructure networking technology. Various software components may also be employed in the various aspects disclosed, including server software, client software, and operating system support programs. Furthermore, databases may be incorporated into one or more of the servers or may be coupled to the servers by way of network connections as is known in the art.

Wireless device 200 includes the hardware and software capability to permit wireless (e.g., cellular) phone calls. Also, wireless device 200 includes capabilities to display a set of contacts as would be found in an electronic phone book or directory. In addition, wireless device 200 may be adapted to send and receive digital or analog data signals and control signals, as known in the art.

Wireless device 200 is coupled to a wireless network 420 or other wireless hub, repeater, or wireless access point. In some aspects, a phone book of contacts (contact list) of the user of the wireless device 200 is presented by the wireless device 200 to the user. The contacts list can either be stored on wireless device 200, locally in a memory on wireless device 200, or may be stored on a server (including social network servers) with appropriate storage so as to provide the contacts list to the wireless device's user.

A wireless connection, (e.g., such as discussed in relation to FIG. 1) can be established between any of wireless device 200, wireless network 420, and a first server 401. The first server 401 may be a conventional computer server adapted and programmed to serve as a server apparatus in a client-server environment. First server 401 may include various functionalities, such as VIM and/or PBX exchange functionality.

Wireless device 200 is adapted to log in and authenticate itself with first server 401 so as to gain access to functions of first server 401. For example, wireless device 200 may log in (using first server 401) to a social networking feature from a third party provider. One such example can include logging into an instant messaging (IM) account feature made possible by first server 401.

First server 401 can be coupled over a suitable communication path, which may be a wired or wireless path, to a second server 403. Second server 403 includes or may be coupled to a database 404 (e.g., a MySQL database). Second server 403 and database 404 include data relating to a user account, and attributes associated with the user's account. For example, second server 403 may be adapted to facilitate IM sessions by the user of wireless device 200. It will be appreciated that in a networked environment servers and databases may be integrated in one device or may be spread over several devices. Accordingly, the identified servers and databases are provided merely for discussion and not limitation of the scope of the invention.

The communication between first server 401 and second server 403 may include Gaim type (instant messaging) formatted communications, and one or both servers may implement a Pidgin platform-translation function or similar function. Pidgin is a multi-platform instant messaging client that flexibly supports a useful. number of commonly used IM protocols. Therefore, a user may be able to log in to more than one service at the same time using the above described technology.

Server 403 may further be adapted and programmed to support an extensible messaging and presence protocol (XMPP). The functionality of second server 403 may allow an instant message to be sent to a computer such as a personal computer (e.g., PC 300), workstation, laptop, or similar device. In aspects, PC 300 is capable of running an instant messaging program that receives the instant message information from second server 403 and displays the same to a user of PC 300. A display screen or analogous visual or audible user output interface shows message content 411 to the user of PC 300.

In some aspects, the message content 411 includes a link, or uniform resource locator (URL) or similar logical connection that allows the user of PC 300 to click or select or indicate that he or she is interested in connecting to the link (URL) presented in message content 411. Specifically, according to some aspects, a user of PC 300 is presented with a URL as a selectable link.

Upon selecting the link or URL presented to the user of PC 300, a browser client may be launched that presents the user of PC 300 with a Flash-based phone interface (a soft-phone) from which the user can click to call a callee via Flash® phone 422. The callee is the wireless device 200 (i.e., the user of the wireless device) and a audio connection via a soft phone application (e.g., via Flash® phone 422) between PC 300 and a third server 406 is established, where third server 406 is adapted and programmed to support such communications and pass them on to the intended wireless device (e.g., wireless device 200), by way of first server 401, for example.

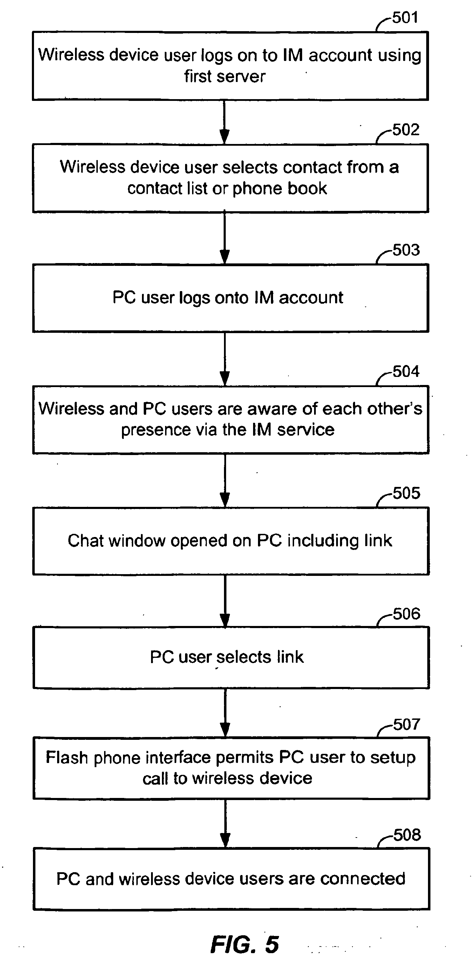

Referring to FIG. 5, an exemplary method for establishing a mobile-to-PC call according to various aspects of the disclosure is illustrated.

At 501, a user of a wireless device 200 can log in to a secure chat or instant messaging (IM) service. The mobile user may see the presence of some of his or her contacts, friends, or other users in the IM environment.

At 502, the user of a wireless device selects one of his or her contacts with whom he or she wishes to speak. The selected contact is a PC user who is also logged in to the IM service at 503 and who may be also aware of the presence of the user of the wireless device at 504.

The wireless device user may establish a chat or IM session with the PC user at step 505, which causes a chat window to open on the screen of the PC. This chat window includes information such as the identity of the mobile user who has initiated contact, and a link (URL) that the PC user can select to establish a call connection with the wireless device user.

When the PC user selects the URL link in step 506 a browser on the PC may pop up a Flash-based telephone interface and allow the PC to establish or set up a call (e.g., using SIP/RTP) at 507.

A connection can then be established from the Flash-based phone interface from the PC to the wireless device using Asterisk or a similar PBX modality. Thus, a call channel is opened up between the wireless device and the PC at 508.

Some aspects of the disclosure may employ a Flash® XIFF application rather than a Pidgin type IM application, or similar or equivalent applications. In yet other aspects a Flash® https protocol or other protocols may alternatively be used to bridge the call between the PC and the wireless device users. It will be appreciated that although commercial products are used herein, such as Flash® from Adobe®, it is merely used as example product that can be used in various aspects. However, it will be appreciated that the various aspects of the disclosure are directed to the underlying functionality, such as a cross-platform multimedia application platform for Flash® and not the actual product itself.

As will be appreciated from the foregoing, various methods can be used to allow for various implementations of placing a call between a wireless device and a PC. For example, in one aspect, the wireless device user (user A) is logged into common server via the wireless device (e.g., using an IM client or social network client). A PC user (user B) is also logged into the common server via the PC (e.g., using an IM client or social network client) through an at least partially wired network connection. User A detects that user B is online, and selects "Call" on the wireless device. The wireless device communicates with a server over http (e.g., the server runs a Perl script). The Perl script can be used to set up the call by:
1) Entering information regarding the person initiating the call (e.g., user A) in a conference database. This record in the database is associated with records in two other tables in the database, by a unique "conference ID".
2) Constructing a URL to a Flash® server (or soft phone server), with a unique extension ID. The unique extension ID is related to the unique conference ID in one of the two database tables referenced above. An example of this URL could be "http://test-flash-server/flash phone?src=1434233428383". In this example, the unique extension ID is "1434233428383".
3) The URL is then sent to user B (on the PC) over an established communication link associated with a communication protocol such as an extensible messaging and presence protocol (XMPP).
4) When the PC user clicks on the URL, the PC opens a web page with a Flash® Phone (or soft phone application), which can be embedded in their web browser. The Flash® Phone contacts the Flash® server (e.g., 406) over the Real Time Messaging Protocol (RTMP) protocol by dialing the unique extension ID passed in via the URL (in the present example, "1434233428383"). The Flash® server can then forward the call request to the PBX server (e.g., an Asterisk server) over the Session Initiation Protocol (SIP).
5) After calling the Perl script, the wireless device receives a dial-in phone number to dial. The wireless device dials that number, which points to the PBX server. The two legs of the call can then be joined in the PBX server.
6) The first user to arrive in the Asterisk is assigned a channel ID. The channel ID is saved in the database, in one of the tables which relates the unique conference ID and the unique extension ID. The first user to arrive can be recognized by:
   a. Wireless Device User - getting the unique conference ID from the DB (by checking their caller ID or a unique dial-in code) and checking that no channel ID has been defined for that unique conference ID.
   b. PC User - getting the unique conference ID from the DB (by checking the unique extension ID passed in over RTMP and subsequently over SIP), and checking that no channel ID has been defined for that unique conference ID.
7) The second user to arrive in the call is recognized as the second user to arrive (using the same mechanism described above in 6, above) and the channel ID is returned from a query to the DB. The calls are then bridged using the channel ID using a standard PBX (Asterisk) mechanism.

It will be appreciated that the foregoing detailed procedures are provided merely for illustration and explanation of the various aspects of the aspects and should not be construed as limiting the various aspects to the specific actions and or elements discussed.

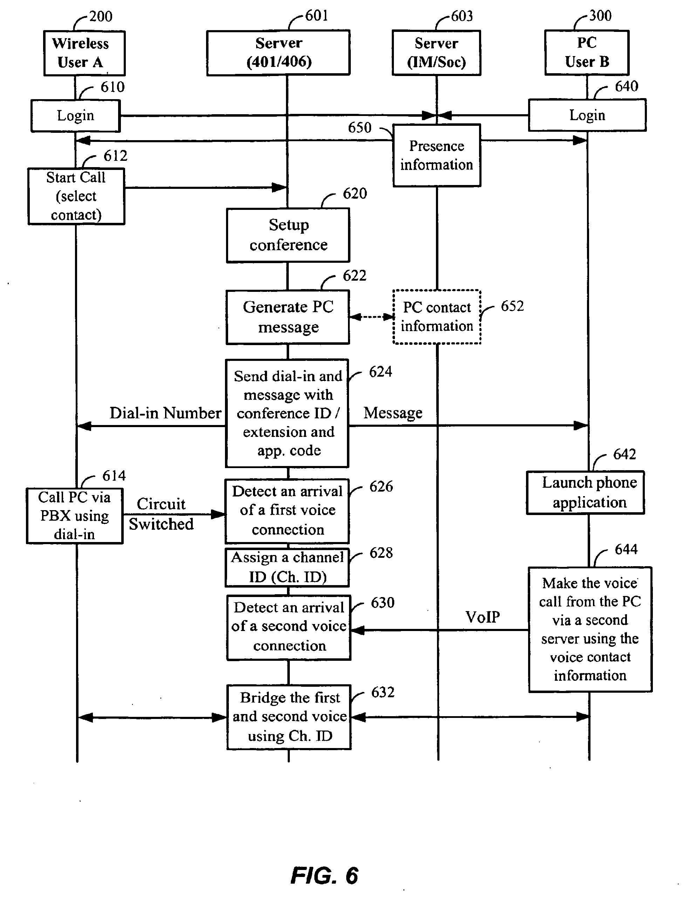

Referring to FIG. 6, a call flow is illustrated for establishing a voice call between a wireless device and a PC, at the wireless device. Generally in the description that follows, each functional element will be described so that the aspects for each element are not confused by the various interactions between elements.

For example, in relation to wireless device 200, the wireless device 200 (user A) can log in to a first server 603 (e.g., an IM server, social networking server, etc.), 610. PC 300 (user B) can also log in to the first server 603, at 640. Presence information 650 can be provided to wireless device 200 (user A) and/or PC 300 (user B). Accordingly, wireless device 200 can identify the presence of the PC 300 based on a presence indication from the first server 603. Using an application (e.g., WCV application 250) on the wireless device 200, user B (e.g., PC 300) can be selected and a second server 601 can be contacted with contact information for the PC to establish the voice call 612. For example, the contact information for the PC (user B) can be IM contact information, email address, social network ID, and the like. A dial-in number is received from the second server 601. In 614, the dial-in number can be used to call a Private Branch Exchange (PBX) server or module in second server 601 to place the voice call to PC 300. It will be appreciated that PBX server, may be part of 601, as illustrated, but may also be a separate server operably coupled to the second server. Further, it will be appreciated that the dial-in communication is circuit-switched communication (e.g., a conventional voice call), whereas the initial communication with the second server can be data (e.g., packet switched) communicated between the application on wireless device 200 and the second server 601.

As noted above, server 601 may comprise one or more servers (e.g., 401 and 406 from FIG. 4) or may include the functionalities of such servers. Referring to server 601, the actions from the server perspective for establishing a voice call between a wireless device 200 and PC 300 will be described. After receiving a call initiation message (from the wireless device 200) including information for the PC 300 at a server 601, a conference is setup, 620, which can include establishing a conference ID to conference the wireless device 200 and the PC 300. In 622, a message is generated for the PC 300 containing voice contact information for the wireless device 200 related to the conference ID. It will be appreciated that PC contact information in some aspects, may be retrieved from the first server 603 (e.g., from an IM or social networking server) that may contain additional contact information, 652, for PC 300. The information for the conference can then be transmit (e.g., via IM, through a social network, etc.) to the PC 300 via the message generated and a dial-in phone number can be sent to the wireless device 200, at 624.

The server 601 then awaits the arrival of a first participant and detects an arrival of a first voice connection from one of the wireless device 200 or the PC 300 (in the illustrated example the wireless device 200 is the first to arrive), in 626. In 628, a channel ID associated with the conference ID is assigned. In 630, an arrival of the second participant is detected, by detecting an arrival of a second voice connection of the other of wireless device 200 or PC 300 (in the illustrated example the PC 300 is the second to arrive). The voice call between the wireless device 200 and PC 300 is completed by bridging the first and second voice connections using the channel ID, in 632.

As discussed in the foregoing, detecting an arrival of the first voice connection can include retrieving the conference ID from a conference database based on: (i) a caller ID, a dial-in number, or a dial-in code for the wireless device 200, or (ii) an extension ID for the PC 300. Then, upon determining that a channel ID has not been assigned, the server 601 can infer that the connection from the wireless device or PC was the first voice connection. Likewise, the arrival of the second voice connection can be detected by retrieving the conference ID from the conference database based on (i) a caller ID, a dial-in number, or a dial-in code for the wireless device 200, or (ii) an extension ID for the PC 300. Then, upon determining the channel ID has been assigned, the server 601 can determine that the current voice connection is the second voice connection. To facilitate establishing the voice call between the wireless device 200 and PC 300, information for the wireless device 200 and for the PC 300 can be stored in a conference database, so it can be retrieved for identifying the calling parties and associating a channel ID, as discussed in the foregoing.

Also, as discussed, in some aspects, the message for the PC 300 can be an instant message (IM) and the voice contact information can be embedded in a URL link and can include an extension ID related to the conference ID. In some aspects, the URL can be directed to a Flash® server (soft phone server or soft phone module), which can be a separate server or integrated into server 601, and include an extension ID related to the conference ID. The message can be transmitted in an extensible messaging and presence protocol (XMPP). Additionally, the message can be transmitted to the PC 300 using information from a social network server and/or using the social network server (which may be the server 603 or may be another remote server).

Referring back to FIG. 6, the actions from the PC 300 perspective for establishing a voice call to wireless device 200 will be described. The PC 300 can log in to a first server 603 (e.g., IM / social network server) that is also accessible by the wireless device 200, in 640. After receiving a message containing voice contact information for the wireless device 200 and code to launch a phone application; the PC 300 can launch the phone application, in 642. In 644, the voice call from the PC 300 via a second server 601 is made using the voice contact information, which is not a phone number of the wireless device 200. For example, the call is made using at least in part a VoIP connection to the second server 601. The call is bridged by the second server 601, as discussed above, so that from a user perspective, PC 300 has simply made a voice call to wireless device 200.

Also, as discussed, in some aspects the message for the PC 300 can be an instant message (IM) and the voice contact information can be embedded in a URL link and can include an extension ID related to the conference ID. In some aspects, the URL can be directed to a soft phone server (which can be a separate server or integrated into server 601) and include an extension ID related to the conference ID. The message can be transmitted in an extensible messaging and presence Protocol (XMPP). Additionally, the message can be transmitted to the PC 300 using information from a social network server and/or using the social network server itself (which may be the server 603 or may be another remote server).

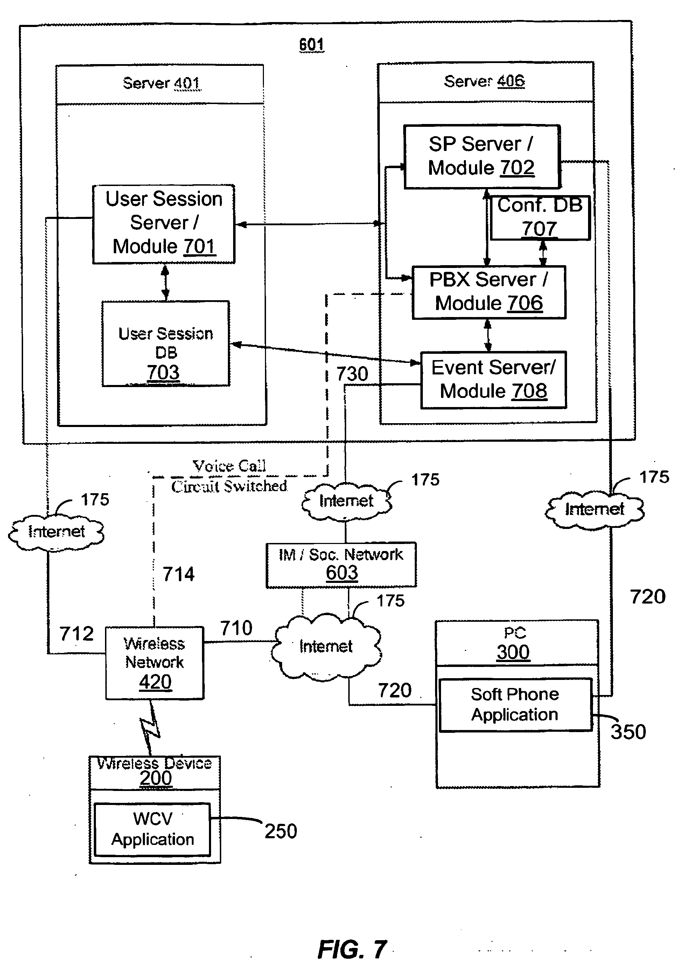

FIG. 7 illustrates in detail example aspects of a system for establishing a voice call between a wireless device and a personal computer including various elements and interconnections related to the various aspects of the disclosure. However, all aspects of the disclosure do not require this specific configuration, which is provided to aid in illustrating various aspects of the disclosure and not to be construed as limiting the scope of the invention.

As illustrated in FIG. 7, the wireless device 200 can log in to a first server 603 (e.g., an IM server, social networking server, etc.) over a data connection 710 through wireless network 420 and the Internet 175. The server 603, in addition to other functionalities, can relay presence information to wireless device 200 (user A) and/or PC 300 (user B). Accordingly, wireless device 200 can identify the presence of the PC 300 based on a presence indication from the first server 603. Using application 250 on the wireless device 200, user B can be selected and a call can be initiated over data connection 712, which may connect through the Internet 175. Upon selection of user B / PC 300, server 601 can be contacted with contact information for the PC 300 to establish the voice call. A dial-in phone number is received from server 601 via data connection 712. The dial-in number can be used to call server 601 (or more specifically, a PBX server / PBX module 706) to place the voice call to PC 300. Further, it will be appreciated that the dial-in communication can be conducted over circuit-switched connection 714 (e.g., a conventional voice call), as illustrated. In contrast, the initial communication with server 601 can be data (e.g., packet switched) communicated between the application on wireless device 200 and the second server 601. However, this two part process is performed transparently, so user A of the wireless device 200 experiences a voice call to PC 300, similar to making a conventional call.

Likewise, user B on PC 300 can connect to server 603 (e.g., IM / social network server), which also is available to wireless device 200. As noted above, server 603 can relay presence information for PC 300 and wireless device 200. Further, after the server 601 (or one of its sub-elements) receives the call request from wireless device 200 for PC 300, a message is sent to PC 300 containing call information for calling the wireless device (without directly calling the phone number of the wireless device). The message may come from server 601 (or one of its sub-elements) over data connection 722 or may be transmitted via server 603 (e.g., IM / social network server) using data connection 730 and data connection 720. Regardless of the path back to PC 300, when the PC 300 receives the message it can be presented in a chat type window for user B to select to call. Alternatively, soft phone application 350 (e.g., a Flash® client) or other application resident on PC 300 can detect special coding in the message and automatically launch the soft phone 422 by accessing soft phone (SP) server / module 702. For example, in one aspect the message may contain a URL that has a link to the soft phone module 702 and a conference ID that is unique for the conference between the wireless device 200 and PC 300. The voice connection over connection 722 can be considered a VoIP connection and may use SIP/RTP, for example. Upon connecting to server 601, the remaining actions are transparent to user B and the call connection is made when the voice connection from PC 300 and the voice connection from wireless device 200 are bridged or joined, as discussed in the foregoing.

It will be appreciated that the elements illustrated may be implemented as independent servers (e.g., 401, 406 as illustrated in FIG. 4) or modules within one or more given servers. For example, PBX module 706 may be part (e.g., a module) in server 406, which may in turn be part of another server 601, as illustrated. The various servers / modules may be physically aggregated or may just be logically aggregated into multilayer functional units (e.g., nested modules). However, in alternative aspects, each of the individual server or modules may also be implemented as a separate device, operably coupled locally or over the Internet. Further, it will be appreciated that the various aspects of the disclosure are not limited to the specific illustration or require all the elements illustrated. Accordingly, the following description of the illustrated elements is merely for purposes of illustration and the various aspects are not limited to any specific arrangement or combination of the elements disclosed herein.

Referring back to FIG. 7, a user session module 701 may receive the incoming request from wireless device 200. The user session module 701 may act as a gateway for the wireless device 200 and may also include push functionality, to push information to wireless device 200 from server 601. Additionally, user session module 701 may be coupled to a user session database 703 to log user session activity. User session activity can be logged from more than one module. For example, event module 708 may also log interactions with social network server 603, PBX module 706, etc. to record the various events related to the voice call between the wireless device 200 and PC 300. In one aspect, the call initiation message from wireless device 200 is forwarded to the PBX module 706. After receiving a call initiation message including information for the PC 300, PBX module 706 can setup a conference. For example, as discussed in the foregoing, a conference ID to conference the wireless device 200 and PC 300 can be created and stored at conference database 707. Additional information regarding wireless device 200 and PC 300 can be stored in one or more records in conference database 707 for later retrieval. For example, caller ID and other identification information can be stored for the wireless device to aid in identifying the wireless device 200 upon receiving a voice call at the PBX module 706. PBX module 706 can also generate a message for PC 300 containing voice contact information for the wireless device 200 related to the conference ID, as discussed above. The message can then be transmitted (e.g., via IM, through social network, etc.) over data connection 730 to the PC 300 or via the soft phone module 702 (e.g., Flash module / server) and connection 722. PBX module 706 can also generate or retrieve a dial-in phone number that can be sent to the wireless device 200. The remaining functional aspects and connectivity of the various modules and/or servers were described in detail in the foregoing and for brevity will not be further described here.

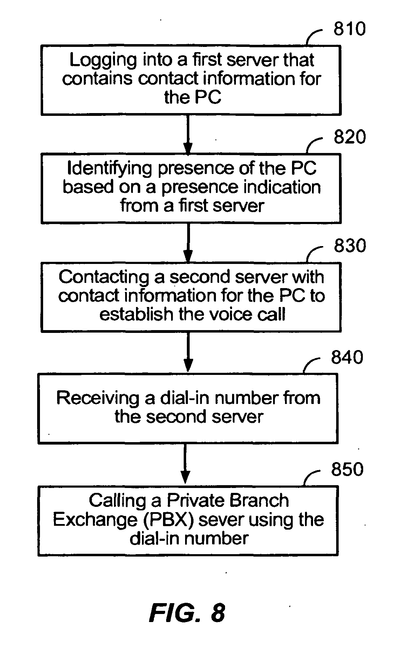

In view of the foregoing, it will be recognized that aspects of the disclosure can include methods in accordance with the various functions, actions, sequences and/or algorithms described herein. For example, as illustrated in the flowchart of FIG. 8, an aspect of the disclosure can include a method of establishing a voice call between a wireless device and a PC, at the wireless device. The method includes logging into a first server, by the wireless device that contains contact information for the PC, 810. A presence of the PC is identified based on a presence indication from the first server, 820. A second server is contacted with contact information for the PC to establish the voice call, 830. A dial-in number is received from the second server, 840. A Private Branch Exchange (PBX) server is called using the dial-in number, 850. It will be appreciated that the PBX server can be integrated into the second server or the various functionalities of the second server can be distributed over two or more servers.

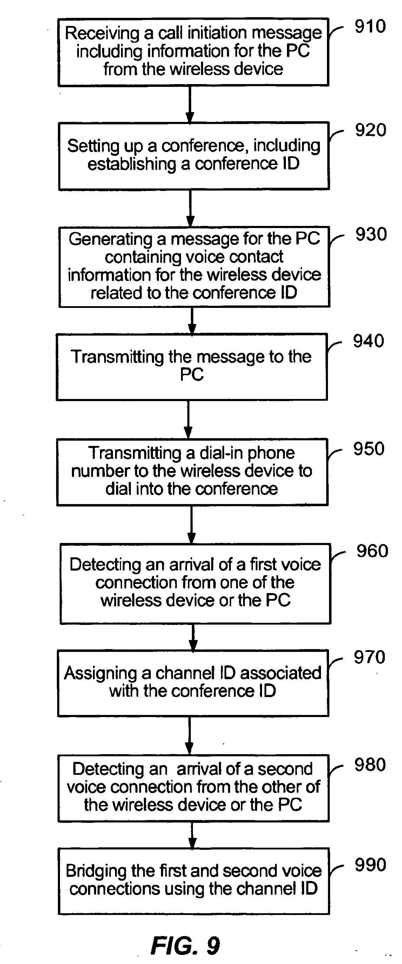

In another example, as illustrated in the flowchart of FIG. 9, an aspect of the disclosure can include a method of establishing a voice call between a wireless device and a PC, at a server. The method can include receiving a call initiation message including information for the PC at a server from the wireless device, 910. A conference can be setup, including establishing a conference ID to conference the wireless device and the PC, 920. A message can be generated for the PC containing voice contact information for the wireless device related to the conference ID, 930. The message can be transmitted to the PC, 940. A dial-in phone number can be transmitted to the wireless device to dial into the conference, 950. Aspects can further include detecting an arrival of a first voice connection from one of the wireless device or the PC, 960. A channel ID associated with the conference ID is then assigned, 970. An arrival of a second voice connection is detected, 980, from the other of the wireless device or the PC. Then, the first and second voice connections can be bridged using the channel ID.

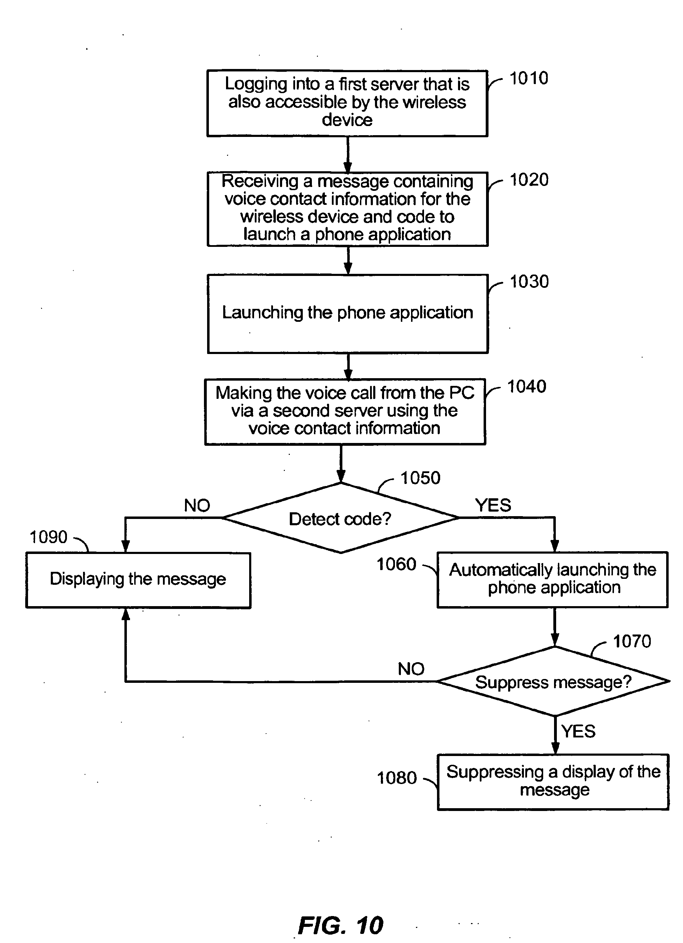

In another example, as illustrated in the flowchart of FIG. 10, an aspect of the disclosure can include a method of establishing a voice call between a wireless device and a PC, at the PC. The method can include logging into a first server that is also accessible by the wireless device, 1010. A message is received at the PC containing voice contact information for the wireless device and code to launch a phone application, 1020, (e.g., Flash phone). The phone application can be launched, 1030, and the voice call can be made from the PC via a second server using the voice contact information, 1040. The voice contact information is not a phone number of the wireless device. In further aspects, if the PC is optionally configured to detect a code in the application, the method can include detecting the code to launch the application, 1050. Upon detecting the code, the soft phone application can be automatically launched, 1060. Further, a display of the message can optionally be suppressed, 1070, so that the message can be suppressed, 1080. Since the message is sent to allow user B to selectively launch the phone application, if the phone application is automatically launched then the message display may be suppressed as being redundant. However, if the code is not detected, 1050, (or the detection option is not activated) then the message can be displayed, 1090, and user B can manually launch the phone application. Additionally, if the message suppression option, 1070, is not activated, the message can be passed on and displayed in 1090. This may be beneficial if the message contains additional information, in addition to the code to launch the soft phone application and the information to complete the call to the wireless device. For example, advertising information, additional links that user A wants to convey (which may be related to the subject of the call), additional text user A wants to convey, and the like may optionally be included in the message.

Those of skill in the art will appreciate that information and signals discussed herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the invention.

As used in this application, the terms "component," "module," "system" and the like are intended to include a computer-related entity, such as but not limited to hardware, firmware, a combination of hardware and software, software, or software in execution. For example, a module may be, but is not limited to being, a process running on a processor, a processor, an object, an executable, a thread of execution, a program, and/or a computer. By way of illustration, both an application running on a computing device and the computing device can be a module. One or more modules can reside within a process and/or thread of execution and a module may be localized on one computer and/or distributed between two or more computers. In addition, these modules can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

Accordingly, it will be appreciated that aspects of the disclosure can include apparatuses having various modules configured to perform the functions disclosed herein. For example, the sequence of actions and/or functionalities illustrated in relation to FIG. 8, may be realized in modules on a wireless device. Likewise, the sequence of actions and/or functionalities illustrated in relation to FIG. 9 may be embodied as modules on one or more servers and the sequence of actions and/or functionalities illustrated in relation to FIG. 10 may be embodied on a personal computer or similar device. Still further, it will be appreciated that the various sequence actions and/or functionalities disclosed herein may be embodied as instructions contained in a non-transitory computer-readable medium (e.g., memory, CD, DVD, hard disk and the like).

Furthermore, various aspects are described herein in connection with a wireless device, which can also be referred to as a terminal or wireless terminal. A wireless device may also be called a subscriber unit, subscriber station, mobile station, mobile, mobile device, remote station, remote terminal, access terminal, user terminal, terminal, communication device, user agent, user device, user equipment (UE), and variations thereof. A wireless device may be a cellular telephone, a satellite phone, a cordless telephone, a personal digital assistant (PDA), a handheld device having wireless connection capability, a computing device, or other processing devices connected to a wireless modem.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95, and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM, etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE, and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (e.g., mobile-to-mobile) ad hoc network systems often using unpaired unlicensed spectrums, 802.xx wireless LAN, BLUETOOTH and any other short- or long- range, wireless communication techniques.

The various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An example storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk, and blu-ray disc where disks usually reproduce data magnetically, while discs usually reproduce data optically with lasers. Combinations of the above should also be included within the scope of computer-readable media.

While the foregoing disclosure discusses illustrative aspects and/or implementations, it should be noted that various changes and modifications could be made herein without departing from the scope of the described aspects and/or implementations as defined by the appended claims. Furthermore, although elements of the described aspects and/or implementations may be described or claimed in the singular, the plural is contemplated unless limitation to the singular is explicitly stated. Additionally, all or a portion of any aspect and/or implementation may be utilized with all or a portion of any other aspect and/or implementation, unless stated otherwise.

## Claims

1. A method of establishing a voice call between a wireless device (200) and a personal computer, PC, (300) in a wireless communication system having a first server (603) and a second server (601), the method comprising:
receiving (620; 910) a call initiation message including information for the PC (300) at the second server (401, 406; 601) from the wireless device (200); the method **characterized in that** it further comprises the steps of, at the second server (401, 406, 601):
setting up (620; 920) a conference, including establishing a conference ID to conference the wireless device and the PC;
generating (622; 930) a message for the PC (300) containing voice contact information for the wireless device related to the conference ID;
transmitting (624; 940) the message to the PC (300); and
transmitting (624; 950) a dial-in phone number to the wireless device (200) to dial into the conference after the message for the PC has been generated.

2. The method of claim 1, further comprising:
detecting (626, 960) an arrival of a first voice connection from one of the wireless device (200) or the PC (300);
assigning (628, 970) a channel ID associated with the conference ID;
detecting (630, 980) an arrival of a second voice connection from the other of the wireless device or the PC; and
bridging (632, 990) the first and second voice connections using the channel ID.

3. The method of claim 2, wherein detecting (626, 960) an arrival of the first voice connection comprises:
retrieving the conference ID from a conference database based on:
a caller ID, the dial-in number, or a dial-in code for the wireless device, or
an extension ID for the PC; and
determining the channel ID has not been assigned.

4. The method of claim 2, wherein detecting an arrival of the second voice connection comprises:
retrieving the conference ID from a conference database based on:
a caller ID, the dial-in number, or a dial-in code for the wireless device, or
an extension ID for the PC; and
determining the channel ID has been assigned.

5. The method of claim 1, wherein setting up the conference further comprises:
storing information for the wireless device in a conference database; and
storing information for the PC in the conference database.

6. The method of claim 1, wherein generating the message for the PC comprises:
constructing a URL to a server including an extension ID related to the conference ID.

7. The method of claim 1, wherein the message is transmitted to the PC using information from a social network server and/or using the social network server.

8. The method of claim 1 wherein the PC uses the voice contact information to connect to the conference via a packet-switched connection; and wherein the wireless device uses the dial-in phone number to dial into the conference via a circuit-switched connection.

9. An apparatus (401, 406; 601) for establishing a voice call between a wireless device (200) and a personal computer, PC, (300), in a wireless communication system having a first server (603) and a second server (601), the apparatus comprising:
means (701, 703) for receiving (612; 910) a call initiation message including information for the PC at the second server (601) from the wireless device; **characterized in that** it further comprises: at the second server (601)
means (701, 703) for setting up (620; 920) a conference, including establishing a conference ID to conference the wireless device (200) and the PC (300);
means (701, 703) for generating (622; 930) a message for the PC containing voice contact information for the wireless device related to the conference ID;
means (701, 703) for transmitting (624; 940) the message to the PC; and
means (701, 703) for transmitting (624; 950) a dial-in phone number to the wireless device to dial into the conference after the message for the PC has been generated.

10. A computer-readable storage medium comprising at least one sequence of instructions related to establishing a voice call between a wireless device (200) and a personal computer, PC, (300), the instructions comprising steps to perform the method of any of claims 1 to 8.

11. A method of establishing a voice call between a wireless device and a personal computer, PC (300), in a wireless communication system having a first server (603) and a second server (601), the method comprising, at the PC (300):
logging (640; 1010) into the first server (603) that is also accessible by the wireless device; the method **characterized in that** it further comprises the steps of:
receiving (624; 1020) from the second server a message at the PC containing voice contact information for the wireless device and code to launch a phone application;
launching (642; 1030) the phone application; and
making (644; 1040) the voice call from the PC (300) via the second server (401, 406; 601) using the voice contact information, wherein the voice contact information is not a phone number of the wireless device.

12. The method of claim 1 or claim 11, wherein the voice call is conducted at least in part over a circuit switched connection of a wireless network.

13. The method of claim 1 or claim 11, wherein the message an instant message, IM.

14. The method of claim 1 or claim 11, wherein the voice contact information is embedded in a URL link and wherein the voice contact information includes a unique extension ID related to a conference ID.

15. The method of claim 11, further comprising:
detecting (1050) the code to launch the phone application in the message; and
automatically (1060) launching the phone application.

16. The method of claim 11
wherein the first server is a presence server that is configured to track presence for the PC based at least in part on the PC being logged into the first server,
wherein receiving the message at the PC is based on the PC being logged into the first server,
wherein the PC uses the voice contact information to make the voice call via a packet-switched connection, and
wherein the launching launches the phone application in response to the received message.

17. A method of establishing a voice call between a wireless device (200) and a PC (300), in a wireless communication system having a first server (603) and a second server (601), the method comprising, at the wireless device (200)
logging (610) into the first server (603), by the wireless device (200) that contains contact information for the PC (300);
the method **characterized in that** it further comprises the steps of:
identifying (650) presence of the PC based on a presence indication from the first server;
contacting (612) the second server (401, 406; 601) with contact information for the PC to trigger establishment of the voice call based on call information configured to be used by the PC for calling the wireless device, wherein the call information is not a phone number of the wireless device;
receiving (624) by the wireless device (200) a dial-in phone number from the second server (401, 406, 601) to connect to the PC (300).

18. The method of claim 17, further comprising: calling (614) a PBX over a circuit switched connection of a wireless network.

19. The method of claim 18,
wherein the presence indication is identified while the PC is logged into the first server,
wherein the contacting includes connecting, in response to the presence indication, to the second server to request that the second server establish the voice call by providing a dial-in phone number for setting up a circuit-switched communication link between the second server and the wireless device and by providing voice contact information for the wireless device to the PC for setting up a packet-switched connection between the second server and the PC, and
wherein the calling uses the dial-in phone number to dial into the conference via the circuit-switched communication link.

20. A personal computer, PC, (300) configured to establish a voice call between a wireless device (200) and the PC (300), in a wireless communication system having a first server (603) and a second server (601), the PC (300) comprising:
means for logging into the first server (603) that is also accessible by the wireless device (200); **characterized in that** it further comprises:
means for receiving a message, at the PC (300) containing voice contact information for the wireless device and code to launch a phone application;
means for launching the phone application; and
means for making the voice call from the PC (300) via the second server (401, 406; 601) using the voice contact information, wherein the voice contact information is not a phone number of the wireless device.

21. A wireless device (200) configured to establish a voice call between the wireless device and a personal computer, PC, (300), in a wireless communication system having a first server (603) and a second server (601), the wireless device (2000 comprising:
means for logging into the first server (603), by the wireless device that contains contact information for the PC; **characterized in that** it further comprises:
means for identifying presence of the PC based on a presence indication from the first server;
means for contacting the second server (401, 406; 601) with contact information for the PC to trigger establishment of the voice call based on call information configured to be used by the PC for calling the wireless device, wherein the call information is not a phone number of the wireless device;
means for receiving a dial-in phone number from the second server to connect to the PC.

22. A computer-readable storage medium comprising instructions related to establishing a voice call between a wireless device (200) and a personal computer, PC, (300) at the PC, including instructions for performing a method in accordance with any of claims 11 to 16.

23. A computer-readable storage medium comprising instructions related to establishing a voice call between a wireless device (200) and a personal computer, PC, (300) at the wireless device, including instructions for performing a method in accordance with any of claims 17 to 19.

## Patentansprüche

1. Ein Verfahren zum Aufbauen eines Sprachanrufs zwischen einer Drahtloseinrichtung (200) und einem Personal Computer bzw. PC (300) in einem Drahtloskommunikationssystem mit einem ersten Server (603) und einem zweiten Server (601), wobei das Verfahren Folgendes aufweist:
Empfangen (620; 910) einer Anrufinitialisierungsnachricht, die Information für den PC (300) an dem zweiten Server (401, 406; 601) von der Drahtloseinrichtung (200) beinhaltet; wobei das Verfahren **dadurch gekennzeichnet ist, dass** es weiter an dem zweiten Server (401, 406, 601) die folgenden Schritte aufweist:
Einrichten (620; 920) einer Konferenz, was das Festlegen einer Konferenz-ID bzw. -Kennung für das Schalten einer Konferenz der Drahtloseinrichtung und des PCs beinhaltet;
Generieren (622; 930) einer Nachricht für den PC (300), die Sprachkontaktinformation für die Drahtloseinrichtung enthält, die mit der Konferenz-ID in Beziehung steht;
Senden bzw. Übertragen (624; 940) der Nachricht an den PC (300); und
Senden bzw. Übertragen (624; 950) einer Einwahltelefonnummer an die Drahtloseinrichtung (200) zum Einwählen in die Konferenz, nachdem die Nachricht für den PC generiert worden ist.

2. Verfahren nach Anspruch 1, das weiter Folgendes aufweist:
Detektieren (626, 960) einer Ankunft bzw. eines Entstehens einer ersten Sprachverbindung von entweder der Drahtloseinrichtung (200) oder dem PC (300);
Zuweisen (628, 970) einer Kanal-ID, die mit der Konferenz-ID assoziiert ist;
Detektieren (630, 980) einer Ankunft einer zweiten Sprachverbindung von dem jeweiligen anderen von dem Drahtlosendgerät oder dem PC; und
Brückenbilden bzw. Verknüpfen (Bridging) (632, 990) zwischen der ersten und zweiten Sprachverbindung unter Verwendung der Kanal-ID.

3. Verfahren nach Anspruch 2, wobei das Detektieren (626, 960) einer Ankunft der ersten Sprachverbindung Folgendes aufweist:
Abrufen der Konferenz-ID aus einer Konferenz-Datenbank basierend auf:
einer Anrufer-ID, der Einwahlnummer oder einem Einwahlcode für die Drahtloseinrichtung, oder
einer Erweiterungs-ID für den PC; und
Bestimmen, dass die Kanal-ID nicht zugewiesen worden ist.

4. Verfahren nach Anspruch 2, wobei das Detektieren einer Ankunft der zweiten Sprachverbindung Folgendes aufweist:
Abrufen der Konferenz-ID aus einer Konferenz-Datenbank basierend auf:
einer Anrufer-ID, der Einwahlnummer oder einem Einwahlcode für die Drahtloseinrichtung oder
einer Erweiterungs-ID für den PC; und
Bestimmen, dass die Kanal-ID zugewiesen worden ist.

5. Verfahren nach Anspruch 1, wobei das Einrichten der Konferenz weiter Folgendes aufweist:
Speichern von Information für die Drahtloseinrichtung in einer Konferenzdatenbank; und
Speichern von Information für den PC in der Konferenzdatenbank.

6. Verfahren nach Anspruch 1, wobei das Generieren der Nachricht für den PC weiter Folgendes aufweist:
Konstruieren einer URL zu einem Server einschließlich einer Erweiterungs-ID, die zu der Konferenz-ID in Beziehung steht.

7. Verfahren nach Anspruch 1, wobei die Nachricht an den PC unter Verwendung von Information von einem Server eines sozialen Netzwerks und/oder unter Verwendung des Servers eines sozialen Netzwerks gesendet wird.

8. Verfahren nach Anspruch 1, wobei der PC die Sprachkontaktinformation verwendet, um sich mit der Konferenz über eine paketvermittelte Verbindung zu verbinden; und wobei die Drahtloseinrichtung die Einwahltelefonnummer verwendet, um sich in die Konferenz über eine leitungsvermittelte Verbindung einzuwählen.

9. Eine Vorrichtung (401, 406; 601) zum Aufbauen eines Sprachanrufs zwischen einer Drahtloseinrichtung (200) und einem Personal Computer bzw. PC (300) in einem Drahtloskommunikationssystem mit einem ersten Server (603) und einem zweiten Server (601), wobei die Vorrichtung Folgendes aufweist:
Mittel (701, 703) zum Empfangen (612; 910) einer Anrufinitialisierungsnachricht, die Information für den PC an dem zweiten Server (601) von der Drahtloseinrichtung beinhaltet; **dadurch gekennzeichnet, dass** sie weiter Folgendes an dem zweiten Server (601) aufweist:
Mittel (701, 703) zum Einrichten (620; 920) einer Konferenz, einschließlich dem Festlegen einer Konferenz-ID bzw. -Kennung für das Schalten einer Konferenz der Drahtloseinrichtung (200) und des PCs (300);
Mittel (701, 703) zum Generieren (622; 930) einer Nachricht für den PC, die Sprachkontaktinformation für die Drahtloseinrichtung enthält, die mit der Konferenz-ID in Beziehung steht;
Mittel (701, 703) zum Senden bzw. Übertragen (624; 940) der Nachricht an den PC (300); und
Mittel (701, 703) zum Senden bzw. Übertragen (624; 950) einer Einwahltelefonnummer an die Drahtloseinrichtung zum Einwählen in die Konferenz, nachdem die Nachricht für den PC generiert worden ist.

10. Ein computerlesbares Speichermedium, das wenigstens eine Sequenz von Instruktionen aufweist, die mit dem Aufbauen eines Sprachanrufs zwischen einer Drahtloseinrichtung (200) und einem Personal Computer bzw. PC (300) in Beziehung stehen, wobei die Instruktionen die Schritte zum Durchführen des Verfahrens nach einem der Ansprüche 1 bis 8 aufweisen.

11. Ein Verfahren zum Aufbauen eines Sprachanrufs zwischen einer Drahtloseinrichtung und einer Personal Computer bzw. PC (300) in einem Drahtloskommunikationssystem mit einem ersten Server (603) und einem zweiten Server (601), wobei das Verfahren an dem PC (300) Folgendes aufweist:
Einloggen (640; 1010) auf dem ersten Server (603), auf den auch durch die Drahtloseinrichtung zugegriffen werden kann; wobei das Verfahren **dadurch gekennzeichnet ist, dass** es weiter die folgenden Schritte aufweist:
Empfangen (624; 1020), von dem zweiten Server, einer Nachricht an dem PC, die Sprachkontaktinformation für die Drahtloseinrichtung und Code zum Starten einer Telefonanwendung enthält;
Starten (642; 1030) der Telefonanwendung; und
Durchführen (644; 1040) des Sprachanrufs von dem PC (300) über den zweiten Server (401, 406; 601) unter Verwendung der Sprachkontaktinformation, wobei die Sprachkontaktinformation keine Telefonnummer der Drahtloseinrichtung ist.

12. Verfahren nach Anspruch 1 oder Anspruch 11, wobei der Sprachanruf zumindest teilweise über eine leitungsvermittelte Verbindung eines Drahtlosnetzwerkes durchgeführt wird.

13. Verfahren nach Anspruch 1 oder Anspruch 11, wobei die Nachricht eine Sofortnachricht bzw. IM (IM = instant message) ist.

14. Verfahren nach Anspruch 1 oder Anspruch 11, wobei die Sprachkontaktinformation in eine URL-Verbindung eingebettet ist und wobei die Sprachkontaktinformation eine eindeutige Erweiterungs- bzw. Extension-ID beinhaltet, die mit der Konferenz-ID in Beziehung steht.

15. Verfahren nach Anspruch 11, das weiter Folgendes aufweist:
Detektieren (1050) des Codes, um die Telefonanwendung in der Nachricht zu starten; und
automatisches (1060) Starten der Telefonanwendung.

16. Verfahren nach Anspruch 11,
wobei der erste Server ein Präsenzserver ist, der konfiguriert ist, um die Präsenz für den PC basierend zumindest teilweise darauf nachzuverfolgen, dass der PC auf einem ersten Server eingeloggt ist,
wobei das Empfangen der Nachricht an dem PC darauf basiert, dass der PC auf dem ersten Server eingeloggt ist,
wobei der PC die Sprachkontaktinformation nutzt, um den Sprachanruf über eine paketvermittelte Verbindung durchzuführen, und
wobei das Starten die Telefonanwendung ansprechend auf die empfangene Nachricht startet.

17. Ein Verfahren zum Aufbauen eines Sprachanrufs zwischen einer Drahtloseinrichtung (200) und einem PC (300) in einem Drahtloskommunikationssystem mit einem ersten Server (603) und einem zweiten Server (601), wobei das Verfahren an der Drahtloseinrichtung (200) Folgendes aufweist:
Einloggen (610) auf dem ersten Server (603) durch die Drahtloseinrichtung (200), die Kontaktinformation für den PC (300) beinhaltet;
wobei das Verfahren **dadurch gekennzeichnet ist, dass** es weiter die folgenden Schritte aufweist:
Identifizieren (650) der Präsenz des PCs basierend auf einer Präsenzanzeige von dem ersten Server;
Kontaktieren (612) des zweiten Servers (401, 406; 601) mit Kontaktinformation für den PC zum Auslösen bzw. Triggern des Aufbaus des Sprachanrufs basierend auf Anrufinformation, die konfiguriert ist, um durch den PC zum Anrufen der Drahtloseinrichtung verwendet zu werden, wobei die Anrufinformation keine Telefonnummer der Drahtloseinrichtung ist;
Empfangen (624), durch die zweite Drahtloseinrichtung (200), einer Einwahltelefonnummer von dem zweiten Server (401, 406, 601) zum Verbinden mit dem PC (300).

18. Verfahren nach Anspruch 17, das weiter Folgendes aufweist: Anrufen (614) einer Nebenstelle bzw. PBX über eine leitungsvermittelte Verbindung eines Drahtlosnetzwerkes.

19. Verfahren nach Anspruch 18,
wobei die Präsenzanzeige identifiziert wird, während der PC auf dem ersten Server eingeloggt ist,
wobei das Kontaktieren Verbinden, ansprechend auf die Präsenzanzeige, mit dem zweiten Server beinhaltet, um anzufragen, dass der zweite Server den Sprachanruf aufbaut, und zwar durch Vorsehen einer Einwahltelefonnummer zum Einrichten einer leitungsvermittelten Kommunikationsverbindung zwischen dem zweiten Server und der Drahtloseinrichtung und durch Vorsehen von Sprachkontaktinformation für die Drahtloseinrichtung an den PC zum Einrichten einer paketvermittelten Verbindung zwischen dem zweiten Server und dem PC, und
wobei das Anrufen die Einwahltelefonnummer nutzt, um sich in die Konferenz über die leitungsvermittelte Kommunikationsverbindung einzuwählen.

20. Ein Personal Computer bzw. PC (300), der konfiguriert ist zum Aufbauen eines Sprachanrufs zwischen einer Drahtloseinrichtung (200) und dem PC (300) in einem Drahtloskommunikationssystem mit einem ersten Server (603) und einem zweiten Server (601), wobei der PC (300) Folgendes aufweist:
Mittel zum Einloggen auf dem ersten Server (603), auf den auch durch die Drahtloseinrichtung (200) zugegriffen werden kann; **dadurch gekennzeichnet, dass** er weiter Folgendes aufweist:
Mittel zum Empfangen einer Nachricht, an dem PC (300), die Sprachkontaktinformation für die Drahtloseinrichtung und Code zum Starten einer Telefonanwendung enthält;
Mittel zum Starten der Telefonanwendung; und
Mittel zum Durchführen des Sprachanrufs von dem PC (300) über den zweiten Server (401, 406; 601) unter Verwendung der Sprachkontaktinformation, wobei die Sprachkontaktinformation keine Telefonnummer der Drahtloseinrichtung ist.

21. Eine Drahtloseinrichtung (200), die konfiguriert ist zum Aufbauen eines Sprachanrufs zwischen der Drahtloseinrichtung und einem Personal Computer bzw. PC (300) in einem Drahtloskommunikationssystem mit einem ersten Server (603) und einem zweiten Server (601), wobei die Drahtloseinrichtung (200) Folgendes aufweist:
Mittel zum Einloggen auf dem ersten Server (603) durch die Drahtloseinrichtung, die Kontaktinformation für den PC enthält; **dadurch gekennzeichnet, dass** sie weiter Folgendes aufweist:
Mittel zum Identifizieren der Präsenz des PCs basierend auf einer Präsenzanzeige von dem ersten Server;
Mittel zum Kontaktieren des zweiten Servers (401, 406; 601) mit Kontaktinformation für den PC zum Auslösen bzw. Triggern des Aufbaus des Sprachanrufs basierend auf Anrufinformation, die konfiguriert ist, um durch den PC zum Anrufen der Drahtloseinrichtung verwendet zu werden, wobei die Anrufinformation keine Telefonnummer der Drahtloseinrichtung ist;
Mittel zum Empfangen einer Einwahltelefonnummer von dem zweiten Server zum Verbinden mit dem PC.

22. Ein computerlesbares Speichermedium, das Instruktionen aufweist, die mit dem Aufbauen eines Sprachanrufs zwischen einer Drahtloseinrichtung (200) und einem Personal Computer bzw. PC (300) in Beziehung stehen, und zwar bei dem PC, die Instruktionen zum Durchführen eines Verfahrens gemäß einem der Ansprüche 11 bis 16 beinhalten.

23. Ein computerlesbares Speichermedium, das Instruktionen aufweist, die mit dem Aufbau eines Sprachanrufs zwischen einer Drahtloseinrichtung (200) und einem Personal Computer bzw. PC (300) in Beziehung stehen, und zwar bei der Drahtloseinrichtung, die Instruktionen zum Durchführen eines Verfahrens gemäß einem der Ansprüche 17 bis 19 beinhalten.

## Revendications

1. Procédé pour établir un appel vocal entre un dispositif sans fil (200) et un ordinateur personnel, PC, (300) dans un système de communication sans fil comportant un premier serveur (603) et un deuxième serveur (601), le procédé comprenant :
recevoir (620 ; 910) un message de lancement d'appel comprenant des informations pour le PC (300) au niveau du deuxième serveur (401, 406 ; 601) à partir du dispositif sans fil (200) ; le procédé étant **caractérisé en ce qu'**il comprend en outre les étapes suivantes, au niveau du deuxième serveur (401, 406, 601) :
établir (620 ; 920) une conférence, cela comprenant l'établissement d'un identificateur de conférence pour mettre en conférence le dispositif sans fil et le PC ;
générer (622 ; 930) un message pour le PC (300) contenant des informations de contact vocal pour le dispositif sans fil associé à l'identificateur ID de conférence ;
transmettre (624 ; 940) le message au PC (300) ; et
transmettre (624 ; 950) un numéro d'appel téléphonique au dispositif sans fil (200) pour appeler et rentrer dans la conférence après que le message pour le PC a été généré.

2. Procédé selon la revendication 1, comprenant en outre :
détecter (626, 960) l'arrivée d'une première connexion vocale à partir de l'un du dispositif sans fil (200) ou du PC (300) ;
affecter (628, 970) un identificateur de canal associé à l'identificateur de conférence ;
détecter (630, 980) l'arrivée d'une deuxième connexion vocale provenant de l'autre du dispositif sans fil ou du PC ; et
ponter (632, 990) les première et deuxième connexions vocales en utilisant l'identificateur de canal.

3. Procédé selon la revendication 2, dans lequel la détection (626, 960) de l'arrivée de la première connexion vocale comprend :
récupérer l'identificateur de conférence dans une base de données de conférence sur la base de :
un identificateur d'appelant, le numéro d'appel, ou un code de numérotation d'appel pour le dispositif sans fil,
ou
un identificateur d'extension pour le PC ; et
déterminer que l'identificateur de canal n'a pas été affecté.

4. Procédé selon la revendication 2, dans lequel la détection de l'arrivée de la deuxième connexion vocale comprend :
récupérer l'identificateur de conférence à partir d'une base de données de conférence sur la base de :
un identificateur d'appelant, le numéro d'appel, ou un code de numérotation d'appel pour le dispositif sans fil, ou
un identificateur d'extension pour le PC ; et
déterminer que l'identificateur de canal a été affecté.

5. Procédé selon la revendication 1, dans lequel l'établissement de la conférence comprend en outre :
mémoriser des informations pour le dispositif sans fil dans une base de données de conférence ; et
mémoriser des informations pour le PC dans la base de données de conférence.

6. Procédé selon la revendication 1, dans lequel la génération du message pour le PC comprend :
construire un URL vers un serveur comprenant un identificateur d'extension associé à l'identificateur de conférence.

7. Procédé selon la revendication 1, dans lequel le message est transmis au PC en utilisant des informations provenant d'un serveur de réseau social et/ou en utilisant le serveur de réseau social.

8. Procédé selon la revendication 1, dans lequel le PC utilise les informations de contact vocal pour se connecter à la conférence par l'intermédiaire d'une connexion à commutation de paquets ; et dans lequel le dispositif sans fil utilise le numéro d'appel téléphonique pour appeler et rentrer dans la conférence par l'intermédiaire d'une connexion à circuits commutés.

9. Dispositif (401, 406 ; 601) pour établir un appel vocal entre un dispositif sans fil (200) et un ordinateur personnel, PC, (300) dans un système de communication sans fil comportant un premier serveur (603) et un deuxième serveur (601), le dispositif comprenant :
des moyens (701, 703) pour recevoir (612 ; 910) un message de lancement d'appel comprenant des informations pour le PC au niveau du deuxième serveur (601) à partir du dispositif sans fil ; **caractérisé en ce qu'**il comprend en outre, au niveau du deuxième serveur (601) :
des moyens (701, 703) pour établir (620 ; 920) une conférence, cela comprenant l'établissement d'un identificateur de conférence pour mettre en conférence le dispositif sans fil (200) et le PC (300) ;
des moyens (701, 703) pour générer (622 ; 930) un message pour le PC contenant des informations de contact vocal pour le dispositif sans fil associé à l'identificateur ID de conférence ;
des moyens (701, 703) pour transmettre (624 ; 940) le message au PC ; et
des moyens (701, 703) pour transmettre (624 ; 950) un numéro d'appel téléphonique au dispositif sans fil pour appeler et rentrer dans la conférence après que le message pour le PC a été généré.

10. Support de stockage lisible par un ordinateur comprenant au moins une séquence d'instructions associée à l'établissement d'un appel vocal entre un dispositif sans fil (200) et un ordinateur personnel, PC, (300), les instructions comprenant des étapes pour réaliser le procédé de l'une quelconque des revendications 1 à 8.

11. Procédé pour établir un appel vocal entre un dispositif sans fil et un ordinateur personnel, PC (300), dans un système de communication sans fil comportant un premier serveur (603) et un deuxième serveur (601), le procédé comprenant, au niveau du PC (300) :
se connecter (640 ; 1010) au premier serveur (603) qui est aussi accessible par le dispositif sans fil ; le procédé étant **caractérisé en ce qu'**il comprend en outre les étapes suivantes :
recevoir (624 ; 1020) à partir du deuxième serveur un message au niveau du PC, contenant des informations de contact vocal pour le dispositif sans fil et du code pour lancer une application téléphonique ;
lancer (642 ; 1030) l'application téléphonique ; et
faire (644 ; 1040) l'appel vocal à partir du PC (300) par l'intermédiaire du deuxième serveur (401, 406 ; 601) en utilisant les informations de contact vocal, les informations de contact vocal n'étant pas un numéro de téléphone du dispositif sans fil.

12. Procédé selon la revendication 1 ou 11, dans lequel l'appel vocal est conduit au moins en partie sur une connexion à commutation de circuits d'un réseau sans fil.

13. Procédé selon la revendication 1 ou 11 dans lequel le message est un message instantané, IM.

14. Procédé selon la revendication 1 ou 11, dans lequel les informations de contact vocal sont intégrées dans un lien URL et dans lequel les informations de contact vocal comprennent un identificateur d'extension unique associé à un identificateur de conférence.

15. Procédé selon la revendication 11, comprenant en outre :
détecter (1050) le code pour lancer l'application téléphonique dans le message ; et
lancer automatiquement (1060) l'application téléphonique.

16. Procédé selon la revendication 11,
dans lequel le premier serveur est un serveur de présence qui est agencé pour suivre la présence du PC sur la base au moins en partie du fait que le PC soit connecté au premier serveur,
dans lequel la réception du message au niveau du PC est basée sur le fait que le PC soit connecté au premier serveur,
dans lequel le PC utilise les informations de contact vocal pour faire l'appel vocal par l'intermédiaire d'une connexion à commutation de paquets, et
dans lequel le lancement lance l'application téléphonique en réponse au message reçu.

17. Procédé pour établir un appel vocal entre un dispositif sans fil (200) et un PC (300), dans un système de communication sans fil comportant un premier serveur (603) et un deuxième serveur (601), le procédé comprenant, au niveau du dispositif sans fil (200) :
se connecter (610) au premier serveur (603), par le dispositif sans fil (200) qui contient des informations de contact pour le PC (300) ;
le procédé étant **caractérisé en ce qu'**il comprend en outre les étapes suivantes :
identifier (650) la présence du PC sur la base d'une indication de présence provenant du premier serveur ;
contacter (612) le deuxième serveur (401, 406 ; 601) avec des informations de contact pour le PC pour déclencher l'établissement de l'appel vocal sur la base d'informations d'appel configurées pour être utilisées par le PC pour appeler le dispositif sans fil, les informations d'appel n'étant pas à un numéro de téléphone du dispositif sans fil ;
recevoir (624) par le dispositif sans fil (200) un numéro d'appel téléphonique à partir du deuxième serveur (401, 406, 601) pour se connecter au PC (300).

18. Procédé selon la revendication 17, comprenant en outre : appeler (614) un PBX par une connexion à commutation de circuits d'un réseau sans fil.

19. Procédé selon la revendication 18,
dans lequel l'indication de présence est identifiée pendant que le PC est connecté au premier serveur,
dans lequel le fait de contacter comprend la connexion, en réponse à l'indication de présence, au deuxième serveur pour demander que le deuxième serveur établisse l'appel vocal en fournissant un numéro d'appel téléphonique pour établir une liaison de communication à circuits commutés entre le deuxième serveur et le dispositif sans fil et en fournissant des informations de contact vocal pour le dispositif sans fil au PC pour établir une connexion à commutation de paquets entre le deuxième serveur et le PC, et
dans lequel le fait d'appeler utilise le numéro d'appel téléphonique pour appeler et rentrer dans la conférence par l'intermédiaire de la liaison de communication à circuits commutés.

20. Ordinateur personnel, PC, (300) agencé pour établir un appel vocal entre un dispositif sans fil (200) et le PC (300), dans un système de communication sans fil comportant un premier serveur (603) et un deuxième serveur (601), le PC (300) comprenant :
des moyens pour se connecter au premier serveur (603) qui est aussi accessible par le dispositif sans fil (200) ; **caractérisé en ce qu'**il comprend en outre :
des moyens pour recevoir un message, au niveau du PC (300), contenant des informations de contact vocal pour le dispositif sans fil et du code pour lancer une application téléphonique ;
des moyens pour lancer l'application téléphonique ; et
des moyens pour faire l'appel vocal à partir du PC (300) par l'intermédiaire du deuxième serveur (401, 406 ; 601) en utilisant les informations de contact vocal, les informations de contact vocal n'étant pas un numéro de téléphone du dispositif sans fil.

21. Dispositif sans fil (200) agencé pour établir un appel vocal entre le dispositif sans fil et un ordinateur personnel, PC, (300), dans un système de communication sans fil comportant un premier serveur (603) et un deuxième serveur (601), le dispositif sans fil (200) comprenant :
des moyens pour se connecter au premier serveur (603), par le dispositif sans fil qui contient des informations de contact pour le PC ; **caractérisé en ce qu'**il comprend en outre :
des moyens pour identifier la présence du PC sur la base d'une indication de présence provenant du premier serveur ;
des moyens pour contacter le deuxième serveur (401, 406 ; 601) avec des informations de contact pour le PC pour déclencher l'établissement de l'appel vocal sur la base d'informations d'appel configurées pour être utilisées par le PC pour appeler le dispositif sans fil, les informations d'appel n'étant pas à un numéro de téléphone du dispositif sans fil ;
des moyens pour recevoir par le deuxième serveur un numéro d'appel téléphonique à partir du deuxième serveur pour se connecter au PC.

22. Support de stockage lisible par un ordinateur comprenant des instructions associées à l'établissement d'un appel vocal entre un dispositif sans fil (200) et un ordinateur personnel, PC, (300) au niveau du PC, comprenant des instructions pour réaliser un procédé selon l'une quelconque des revendications 11 à 16.

23. Support de stockage lisible par un ordinateur comprenant des instructions associées à l'établissement d'un appel vocal entre un dispositif sans fil (200) et un ordinateur personnel, PC, (300) au niveau du dispositif sans fil, comprenant des instructions pour réaliser un procédé selon l'une quelconque des revendications 17 à 19.
